# EUROPEAN PATENT APPLICATION

(11) **EP 3 098 006 A1**
(43) Date of publication of application: **30.11.2016**
(21) Application number: 15169085.6
(22) Date of filing: 25.05.2015
(51) Int. Cl.: B23B 51/04

(54) **CUTTER HEAD**

(71) Applicant: Sandvik Intellectual Property AB, 811 81 Sandviken (SE)
(72) Inventor: Paulsson, Fredrik, 802 60 Gävle (SE); Gangstad, Lars, 811 61 Sandviken (SE)

(57) **Abstract**

Herein a cutter head (2) for deep hole cutting is disclosed. The cutter head (2) comprises a cutter body (4) having an axially extending centre axis (6) and an opening (22) for discharging chips. The opening (22) is arranged in a sector stretching over an angle (α). Seen in a view of a cutting end portion (8) of the cutter body (4) along the centre axis (6), the cutter body (4) along a circumference within the sector has a varying outer radial distance, the varying outer radial distance ranging between the second outer radial distance (r2) and a third outer radial distance (r3), the third outer radial distance (r3) extending perpendicularly to the centre axis (6) from the centre axis (6) to an outer circumference of the cutter body (4), and the third outer radial distance (r3) being larger than the second outer radial distance (r2).

## Description

### TECHNICAL FIELD

The present invention relates to a cutter head for deep hole cutting, such as e.g. solid drilling, boring, or trepanning, with a hole depth of 10, or more, times the hole diameter.

### BACKGROUND

In deep hole cutting chip evacuation is of particular consideration. One type of cutter heads for deep hole cutting comprises at least one cutting member arranged at one axial end of the cutting head and an inner channel. During drilling or boring a liquid, such as oil or an emulsion, is pumped to an outer side of the cutter head. The liquid together with the chips are discharged via the inner channel.

US 6682275 discloses a deep hole drill for chip-removing drilling in a workpiece including a body which has a cutting head and an integral cutting part. The body defines a longitudinal axis of rotation and has a longitudinal internal channel which opens into an end face of the cutting head for receiving chips that are entrained in a cooling medium. A chip removing insert is disposed on the cutting head. A support pad and a guide bar are disposed on a generally cylindrical outer peripheral surface of the cutting head and are arranged in circumferentially spaced relationship to one another. Cooling ducts are formed in the outer peripheral surface and are oriented generally parallel to the axis. The cooling ducts are open at the end face for conducting cooling medium thereto. The cooling ducts are situated adjacent the support pad and guide bar, respectively, for cooling same.

JP 2004090105 A discloses a deep hole cutting device having high discharging property of chips and high cutting efficiency. Coolant is supplied to two cutting edges through communication clearances between an outer peripheral surface of a boring head of the deep hole cutting device and an inner peripheral surface of a hole being cut. The coolant flows from the communication clearances into a large and a small discharge port of the boring head. The communication clearances are sized so that the ratio between the amounts of coolant inflow to the cooling discharge ports is the same as the opening area ratio of the two discharge ports, or the amount of inflow to the small discharge port is relatively larger than its opening area ratio.

The size of a clearance between the peripheral surface of a cutter head and a hole being cut by the cutter head is relevant for the flow of liquid to openings and the inner channel of the cutter head. A sufficient flow of liquid is required for proper discharging of chips.

### SUMMARY

It is an object of the present invention to provide a cutter head, which in use ensures supply of liquid for discharging chips from a cutter head for deep hole cutting.

According to an aspect of the invention, the object is achieved by a cutter head for deep hole cutting comprising a cutter body having an axially extending centre axis, which centre axis extends along a centre of a hole to be produced by the cutter head, the cutter body having a cutting end portion and a connecting end portion opposite to each other seen along the centre axis, the connecting end portion being configured to be connected to a drill tube. The cutter body comprises:
- a cutting member seat at a peripheral portion at the cutting end portion, the cutting member seat having a tangential support surface and being configured for receiving a cutting member configured for cutting a workpiece in an axial direction,
- a support member seat for receiving a support member, or a support member portion, the support member or support member portion being configured for non-cutting radial support of the cutter head in a workpiece, and
- an opening for discharging chips facing the cutting end portion and communicating with an inner channel extending in the cutter body, axially along the centre axis.

Seen in a view of the cutting end portion along the centre axis, the opening is arranged in a sector stretching over an angle extending from the tangential support surface of the cutting member seat in a circumferential direction away from the tangential support surface. Seen in the view of the cutting end portion, the cutter body has a first outer radial distance at the cutting member seat and a second outer radial distance in a portion of the sector, the first and second outer radial distances extending perpendicularly to the centre axis from the centre axis to an outer circumference of the cutter body, and the first outer radial distance being larger than the second outer radial distance. Further, seen in the view of the cutting end portion, the cutter body along a circumference within the sector has a varying outer radial distance, the varying outer radial distance ranging between the second outer radial distance and a third outer radial distance, the third outer radial distance extending perpendicularly to the centre axis from the centre axis to an outer circumference of the cutter body, and the third outer radial distance being larger than the second outer radial distance. Since the cutter body along a circumference within the sector has a varying outer radial distance a number of design options for the cutter head are opened up. The clearance between the cutter head and a hole being cut by the cutter head may provide an area sufficiently large for supplying liquid to the opening for chip evacuation. Further, due to the varying outer radial distance within the sector, the flow of liquid between the cutter head and the hole being cut may be directed towards one or more particular portions of the cutter head at its cutting end, for improved chip evacuation and/or particular cooling of the cutting member. Moreover, due to the varying outer radial distance within the sector, the third outer radial distance may be arranged in an area of the cutter body subjected to high stress, such as e.g. an area at a vicinity of the cutting member seat, while the cutter head within the sector is capable of admitting a sufficient flow of liquid to pass to the opening. As a consequence the above-mentioned object is achieved.

The cutter head, at its connecting end portion, may be mounted on a drill tube to form a tool for deep hole cutting. Such a tool may be rotated in a deep hole cutting machine, or the workpiece may be rotated in relation to such a tool. During drilling or boring a liquid, such as oil or an emulsion, is pumped to an outer side of the cutter head. The liquid may flow along and outside of the tool to the cutter head. Alternatively, a separate channel may be provided in the drill tube for transporting the liquid to an outside of the cutter head. The liquid and the chips are discharged via the inner channel in the cutter head and the tool. The cutting member may be a replaceable cutting insert or the cutting member may be brazed to the cutter body in the cutting member seat. A support member arranged in the support member seat may be replaceable. In alternative embodiments, a support member portion of the cutter body may protrude slightly from the remainder of the cutter body to extend to the maximum outer radial distance of the cutter head. The support member portion may be coated with a wear resistant material.

According to embodiments, seen in the view of the cutting end portion, an outer surface of the cutter body within the sector may have a constant radius extending from a radial centre point, wherein the radial centre point is offset from the centre axis in a direction away from the opening. In this manner, the second and third outer radial distances may be easily achieved when manufacturing the cutter body. The constant radius may be programmed into a numerically controlled machine used when shaping the outer surface within the sector.

According to embodiments, the third outer radial distance may be arranged at an angle within a range of -15 - +45 degrees from a line extending from the centre axis to a radially outer point of the cutting member, a positive direction of the angle extending in the circumferential direction away from the tangential support surface. In this manner, the larger third outer radial distance may be arranged with in a portion of the sector, in which the cutter body is subjected to large tensile stress during cutting in a workpiece.

According to embodiments, the varying outer radial distance may have a fourth outer radial distance, the fourth outer radial distance extending perpendicularly to the centre axis from the centre axis to an outer circumference of the cutter body, and the fourth outer radial distance being larger than the second outer radial distance. The fourth outer radial distance may be arranged at an opposite circumferential side of the second outer radial distance than the third outer radial distance. In this manner, the second outer radial distance may form a local minimum. Such a local minimum may be arranged at a circumferential position with in the sector such that during cutting liquid may be directed in a desired direction towards the opening and/or the cutting member.

According to embodiments, the cutter body may comprise:
- a body portion forming an inner cylindrical surface of the inner channel, and
- a transitional wall portion extending between the opening and the body portion. The transitional wall portion may have an interior surface extending at an angle within a range of 3 - 35 degrees to the centre axis, seen in a cross section through the cutter body along the centre axis and including the centre axis. In this manner, a smooth transition from the opening to the inner channel may be provided. Such a smooth transition may promote chip evacuation from the opening towards the inner channel.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 illustrates a cutter head according to embodiments,
Fig. 2 illustrates a view of a cutting end portion of the cutter head of Fig,
Fig. 3 illustrates the cutter head of Figs. 1 and 2 in a side view,
Fig. 4 illustrates a cross section through the cutter head of Figs. 1 - 3, and
Figs. 5 - 7 illustrate cutter heads according to alternative embodiments.

### DETAILED DESCRIPTION

Aspects of the present invention will now be described more fully. Like numbers refer to like elements throughout. Well-known functions or constructions will not necessarily be described in detail for brevity and/or clarity. The terms circumference and circumferential as used herein refer not only to circular or elliptical portions of an outer edge of a radial cross section through the cutter body, but also to other shapes of the outer edge of a radial cross section through the cutter body. As used herein, an outer radial distance of the cutter head always extends from the centre axis of a hole being cut by the cutter head to an outer surface of the cutter body. Moreover, herein an outer radial distance always extends perpendicularly to the centre axis of a hole being cut by the cutter head. Also, the term sector is used herein with reference to an area extending over an angel of the cutter body, in which sector the cutter body need not form a perfect circle.

It is the projected area of the cutter head along the centre axis, which defines the throughflow area/s for liquid between the cutter head and a hole being cut by the cutter head. Accordingly, the various outer radial distances discussed herein need not be provided in the same axial position along the centre axis, but may be provided at different axial positions along the centre axis. Put differently, in a view along the centre axis, an outer radial distance of a particular portion around the circumference of the cutter head is formed by that portion of the cutter body extending farthest from the centre axis seen in the view along the centre axis.

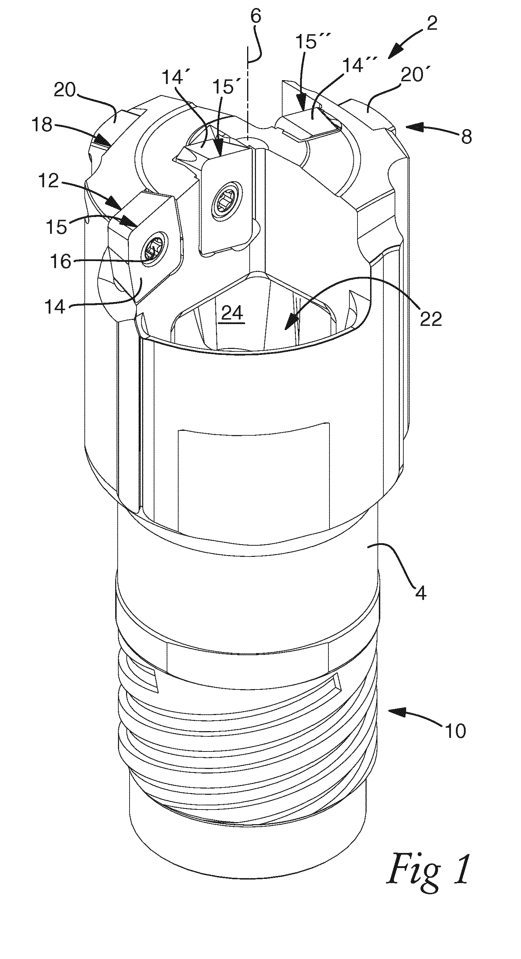

Fig. 1 illustrates a cutter head 2 according to embodiments. The cutter head 2 is configured of for deep hole cutting, i.e. it is configured for cutting holes having a depth of 10 times or more the diameter of the hole. The cutter head 2 comprises a cutter body 4 having an axially extending centre axis 6. The centre axis 6 extends along a centre of a hole to be produced by the cutter head. Since the cutter head 2 is not symmetric and has a varying circumference, an actual centre line (if such a line may at all be established) may differ from the centre axis 6. The cutter body 4 has a cutting end portion 8 and opposite thereto, seen along the centre axis 6, a connecting end portion 10. The connecting end portion 10 is provided with threads for connection to a correspondingly threaded drill tube. For instance JP 2004090105 A discloses a cutter head with a drill tube engaged in a deep hole cutting operation.

The cutter body 4 comprises a cutting member seat 12 at a peripheral portion at the cutting end portion 8. The cutter head 2 comprises a cutting member 14 arranged in the cutting member seat 12. The cutting member 14 comprises a cutting edge 15, which cutting edge 15 is comprised in an asymmetric cutting edge geometry of the cutter head 2. In these embodiments the cutting member 14 is a cutting insert. The cutting insert is secured in the insert seat 12 by means of a screw 16 and may be replaced by removing the screw 16. The cutting member 14 is configured for cutting a workpiece in an axial direction, i.e. in a direction along the centre axis 6, with its cutting edge 15. The cutter body 4 comprises a support member seat 18 in which a support member 20 is received. The support member 20 is configured for non-cutting radial support of the cutter head 2 in a relevant workpiece. Further the cutter body 4 comprises an opening 22 for discharging chips. The opening 22 faces the cutting end portion 8 and communicates with an inner channel 24 extending in the cutter body 4.

The cutter body 4 comprises further cutting members 14', 14" arranged in further cutting member seats. Each of the further cutting members 14', 14" comprises a further cutting edge 15', 15", which together with the cutting edge 15 form the asymmetric cutting edge geometry of the cutter head 2. The cutting edge geometry is asymmetric in the sense that the cutter head 2 comprises differently shaped and/or positioned cutting edges on opposite sides of the centre axis 6. In these embodiments the cutting edges 15 and 15' are provided on one side of the centre axis 6 and the cutting edge 15" is arranged on an opposite side of the centre axis 6. For such an asymmetric cutting edge geometry one or more support members 20 are required to support the cutter head 2 in a radial direction in a hole being cut, in order to balance asymmetrically directed cutting forces produced by the cutting edges 15, 15', 15" during cutting. In these embodiments a further support member 20' for radially supporting the cutter head 2 is provided in a further support member seat.

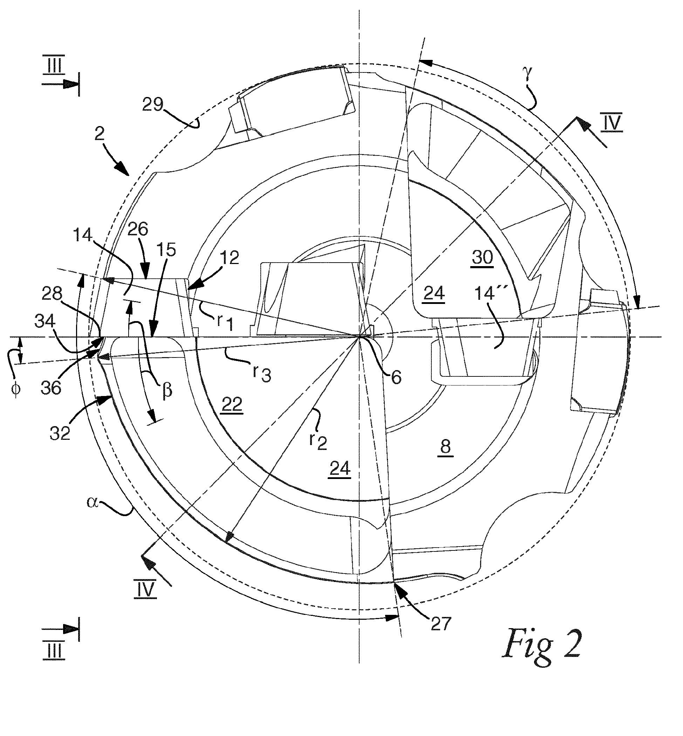

**Fig. 2** illustrates a view of the cutting end portion 8 along the centre axis 6 of the cutter head 2 of **Fig. 1****.** The cutting member seat 12 has a tangential support surface 26. The cutting member 14 is positioned in the cutting member seat 12 supported inter alia by the tangential support surface 26. Positioned in this manner the cutting edge 15 faces the opening 22 such that chips formed during a cutting operation by the cutting edge 15 may be evacuated through the opening 22 and the inner channel 24.

The opening 22 is arranged in a sector stretching over an angle α extending from the tangential support surface 26 of the cutting member seat 12 in a circumferential direction away from the tangential support surface 26. The sector has its centre in the centre axis 6 and stretches from the tangential support surface 26 over a major portion of the opening 22 to a peripheral end portion 27 of the opening 22 opposite to the tangential support surface 26. The angle α may be e.g. less than 180°, or less than 150°, or within a range of 90 - 140°. Minor portions of the opening 22 may extend outside the sector.

Seen in the view of the cutting end portion 8, i.e. as in **Fig. 2**, the cutter body 4 has a first outer radial distance r1 at the cutting member seat 12, and a second outer radial distance r2 in a portion of the sector. The first and second outer radial distances r1, r2 extend perpendicularly to the centre axis 6 and from the centre axis 6 to an outer circumference of the cutter body 4. The first outer radial distance r1 is larger than the second outer radial distance r2. Moreover, seen in the view of the cutting end portion 8, the cutter body 4 along a circumference within the sector has a varying outer radial distance. The varying outer radial distance ranges between the second outer radial distance r2 and a third outer radial distance r3. Also the third outer radial distance r3 extends perpendicularly to the centre axis 6, from the centre axis 6 to an outer circumference of the cutter body 4. The third outer radial distance r3 is larger than the second outer radial distance r2.

Firstly, since the second outer radial distance r2 is smaller than the first outer radial distance r1, liquid may pass between the cutter head 2 and a hole being cut by the cutter head 2 within the sector. Thus, the liquid may cool the cutting member 14 and transport chips into the opening 22 and through the inner channel 24. Secondly, the varying outer radial distance provides a clearance between the cutter head 2 and the hole being cut by the cutter head 2, which clearance in turn provides an area sufficiently large for supplying sufficient liquid to the opening 22 for chip evacuation. Moreover, while such a clearance may be provided, the third outer radial distance r3, which is larger than the second outer radial distance r2, may ensure that the cutter body 4 is strong enough in an area subjected to high stress. Alternatively, or additionally, the varying outer radial distance within the sector may be utilised for directing the liquid towards desired areas of the cutting edge/s, and/or the opening 22.

A varying outer radial distance entails that the gap between the cutter body 4 and a hole 29 being cut by the cutter head 2 within the sector has a varying width. That is, the gap is not of a constant width. The varying width of the gap may extend over a major portion of the sector. A singular notch, or a singular protrusion, extending only over a fraction of the sector and thus, only affecting the width of the gap over a few degrees of the sector, e.g. up to 3 degrees, may not be encompassed in the term varying outer radial distance.

The varying outer radial distance may extend also outside the sector, in particular outside the sector at its end farthest away from the cutting member seat 12.

The third outer radial distance r3 may be the largest outer radial distance within the sector. The third outer radial distance r3 may form a local maximum of the varying outer radial distance within the sector, as in the embodiments of **Figs.1** **and** **2**.

According to some embodiments, the third outer radial distance r3 may be arranged at an angle β within a range of - 15 - +45 degrees from a line 28 extending from the centre axis to a radially outer point of the cutting member 14. A positive direction of the angle β extends in the circumferential direction away from the tangential support surface 26.

In these embodiments, the third outer radial distance r3 is arranged at an angle β within a range of - 5 - +35 degrees from the line 28 extending from the centre axis 6 to the radially outer point of the cutting member 14, within which range of the cutting member 14 the cutter body 4 is subjected to high stress during cutting.

The cutter body 4 comprises a further opening 30 for discharging chips. The further opening 30 faces the cutting end portion 8 and communicates with the inner channel 24. Seen in the view of the cutting end portion 8, i.e. as in **Fig. 2**, the further opening 30 is arranged in a further sector. Seen in the view of the cutting end portion 8, the cutter body 4 along an outer circumference within the further sector has an outer radial distance of variable length. The outer radial distance of variable length within the further sector extends perpendicularly to the centre axis 6 from the centre axis 6 to the outer circumference of the cutter body 4. In this manner, also in the further sector liquid flowing between the cutter head 2 and the hole being cut may be directed towards a desired portion of the further opening 30, e.g. to promote chip evacuation.

The further sector extends over an angle γ, and is arranged approximately opposite to the sector at the opening 22. The further sector and further opening 30 are arranged at one of the further cutting members 14".

The further sector has its centre in the centre axis 6 and stretches from the further cutting member 14" over a major portion of the further opening 30 to a peripheral end portion of the further opening 30 opposite to the further cutting member 14". Minor portions of the further opening 30 may extend outside the further sector.

The further opening 30 may be smaller than the opening 22. The angle γ may be smaller than the angle α.

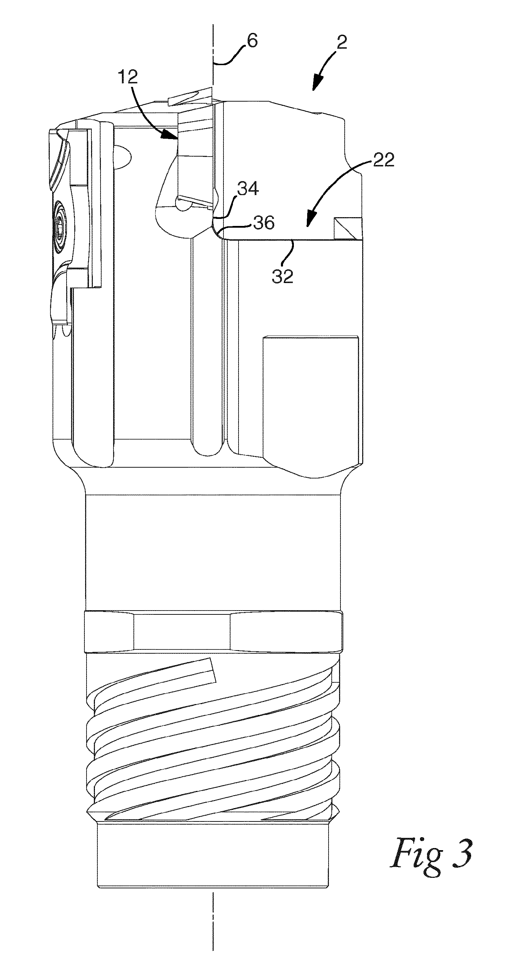

**Fig. 3** illustrates the cutter head 2 of **Figs. 1** **and** **2** in a side view, i.e. a view perpendicularly to the centre axis 6. The side view of **Fig. 3** is indicated with III in **Fig. 2****.** Seen in the view perpendicularly to the centre axis 6, a circumferentially extending outer edge 32 of the opening 22 is arranged at a distance from the cutting member seat 12. In this manner, the opening 22 may be arranged at a distance axially from the cutting edge 15, which may be advantageous from a chip evacuation perspective through the opening 22.

Seen in the view perpendicularly to the centre axis 6, the opening 22 comprises a longitudinal outer edge 34. The longitudinal outer edge 34 has a component extending in parallel with the centre axis 6. A transitional edge 36 extends between the longitudinal outer edge 34 and the circumferentially extending outer edge 32. Suitably, the transitional edge 36 is curved in order to favourably distribute stress in the cutter body 4 at the opening 22.

The third outer radial distance r3 is arranged at the longitudinal outer edge 34 or at the transitional edge 36, see **Fig. 2**. In this manner, the strength provided by the cutter body 4 at the large third outer radial distance r3 is arranged at a portion of the opening 22 where the cutter body 4 is subjected to high stress.

According to alternative embodiments, an outer radial distance at the longitudinal outer edge 34 and the transitional edge 36 is larger than the second outer radial distance r2. Whereas, the even larger third outer radial distance r3 may be arranged at a different portion of the opening 22.

According to some embodiments, seen in the view along the centre axis 6, the third outer radial distance r3 may be arranged within an angle φ of less than 30 degrees from the longitudinal outer edge 34, see **Fig. 2**.

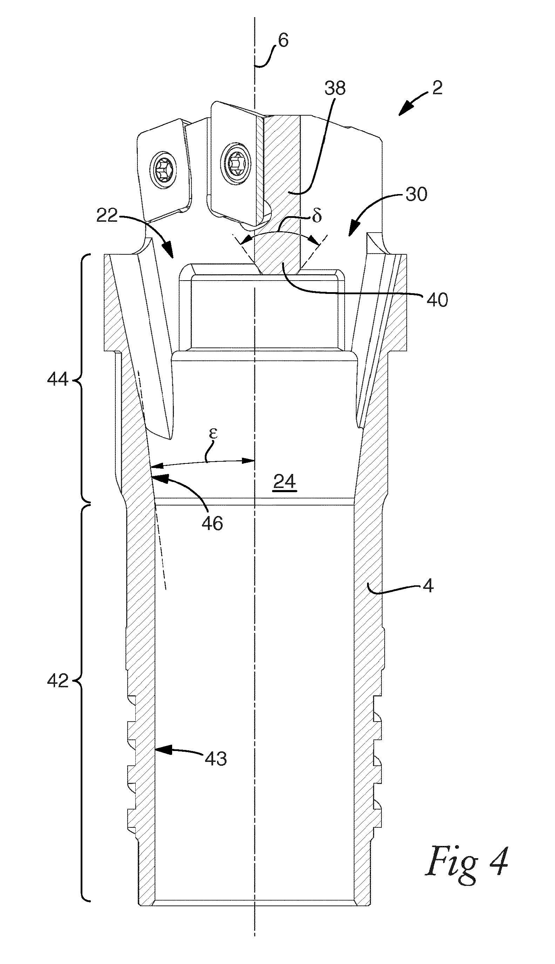

**Fig. 4** illustrates a cross section through the cutter head 2 of **Figs. 1 - 3** along line IV-IV in **Fig. 2****.** In **Fig. 4** the opening 22 and the further opening 30 as well as the inner channel 24 extending in the cutter body 4, are clearly shown. The inner channel 24 extends axially along the centre axis 6.

The cutter body 4 comprise a partition 38 extending between the opening 22 and the further opening 30. The partition 38 comprises a chamfering portion 40. The chamfering portion 40 forms an acute angle δ pointing towards the inner channel 24. In this manner, a smooth transition may be provided for the liquid on its way through the opening 22 and the further opening 30 into the inner channel 24. The partition 38 extends along the centre axis 6.

The cutter body 4 comprises a body portion 42 forming an inner cylindrical surface 43 of the inner channel 24, and a transitional wall portion 44 extending between the opening 22 and the body portion 42. The transitional wall portion 44 has an interior surface 46 extending at an angle ε within a range of 3 - 35 degrees to the centre axis 6, seen in a cross section through the cutter body 4 along the centre axis 6 and including the centre axis 6, e.g. as in the view illustrated in **Fig. 4****.**

The interior surface 46 may have several surface portions. One or more of such surface portions may extend at the angle ε. If the interior surface 46 comprises a curved portion, a tangent of the interior surface extends at the angle ε.

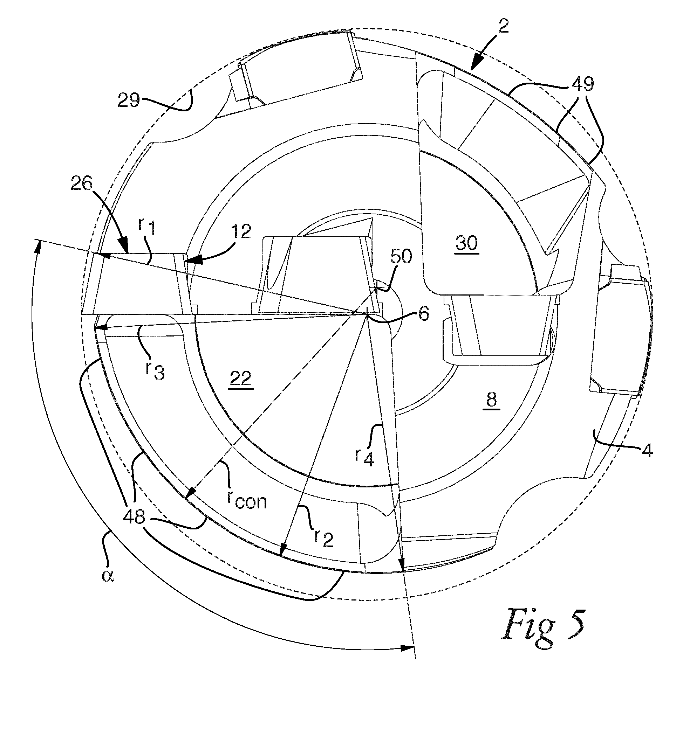

**Fig. 5** illustrates a cutter head 2 according to alternative embodiments. **Fig. 5** illustrates a view of the cutting end portion 8 along a centre axis 6 of the cutter head 2. A hole 29 being cut by the cutter head 2 is indicated in Fig. 5. The cutter head 2 of these embodiments resembles in much the cutter head of the previous embodiments. Further features will be discussed in the following.

Again, the opening 22 is arranged in a sector stretching over an angle α extending from the tangential support surface 26 of the cutting member seat 12 in a circumferential direction away from the tangential support surface 26. The sector has its centre in the centre axis 6.

Again, seen in the view of the cutting end portion 8, i.e. as shown in **Fig. 5****,** the cutter body 4 has a first outer radial distance r1 at the cutting member seat 12, and a second outer radial distance r2 in a portion of the sector. The first outer radial distance r1 is larger than the second outer radial distance r2. Seen in the view of the cutting end portion 8, the cutter body 4 along a circumference within the sector has a varying outer radial distance. The varying outer radial distance ranges between the second outer radial distance r2 and a third outer radial distance r3. The third outer radial distance r3 is larger than the second outer radial distance r2.

The varying outer radial distance has a fourth outer radial distance r4. The fourth outer radial distance r4 extends perpendicularly to the centre axis 6 from the centre axis 6 to an outer circumference of the cutter body 4. The fourth outer radial distance r4 is larger than the second outer radial distance r2. The fourth outer radial distance r4 is arranged at an opposite circumferential side of the second outer radial distance r2 than the third outer radial distance r3.

Seen in the view of the cutting end portion 8, as shown in Fig. 5, an outer surface 48 of the cutter body 4 within at least a portion of the sector has a constant radius r_{con} extending from a radial centre point 50. The radial centre point 50 is offset from the centre axis 6 in a direction away from the opening 22. Since the radial centre point 50 is offset from the centre axis 6 in this manner, the second and third outer radial distance r2, r3, extending from the centre axis 6, are formed.

Similarly, an outer surface 49 of the cutter body 4 at the further opening 30 may have a constant radius extending from an offset radial centre point.

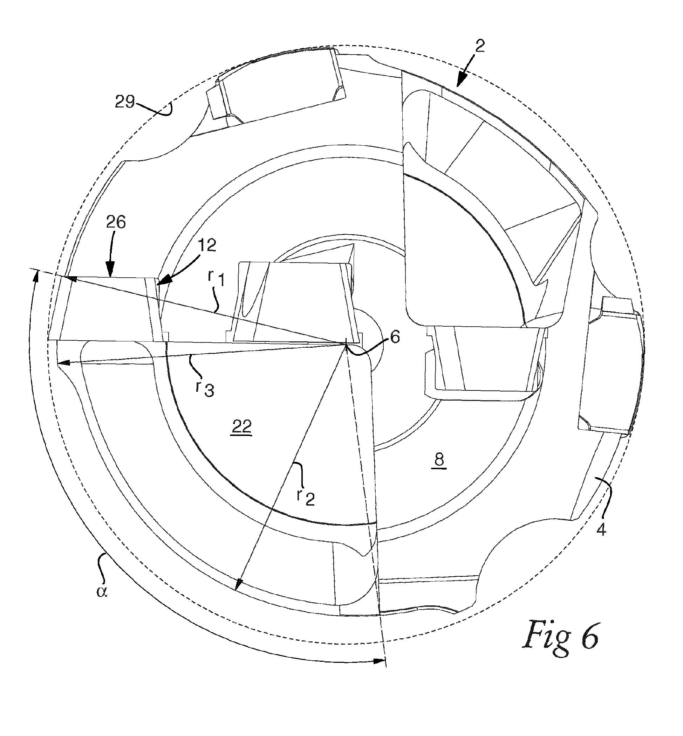

**Fig. 6** illustrates a cutter head 2 according to alternative embodiments. **Fig. 6** illustrates a view of the cutting end portion 8 along a centre axis 6 of the cutter head 2. A hole 29 being cut by the cutter head 2 is indicated in Fig. 6. The cutter head 2 of these embodiments resembles in much the cutter head of the previous embodiments. Further features will be discussed in the following.

Again, the opening 22 is arranged in a sector stretching over an angle α extending from the tangential support surface 26 of the cutting member seat 12 in a circumferential direction away from the tangential support surface 26. The sector has its centre in the centre axis 6.

Again, seen in the view of the cutting end portion 8, i.e. as shown in **Fig. 6**, the cutter body 4 has a first outer radial distance r1 at the cutting member seat 12, and a second outer radial distance r2 in a portion of the sector. The first outer radial distance r1 is larger than the second outer radial distance r2. Seen in the view of the cutting end portion 8, the cutter body 4 along a circumference within the sector has a varying outer radial distance. The varying outer radial distance ranges between the second outer radial distance r2 and a third outer radial distance r3. The third outer radial distance r3 is larger than the second outer radial distance r2.

In these embodiments the cutter body 4 within the sector has portions of two different constant radii extending from the centre axis 6. The two different constant radii correspond to the second and third outer radial distances r2, r3, respectively.

The third outer radial distance r3 corresponds substantially to the first outer radial distance r1.

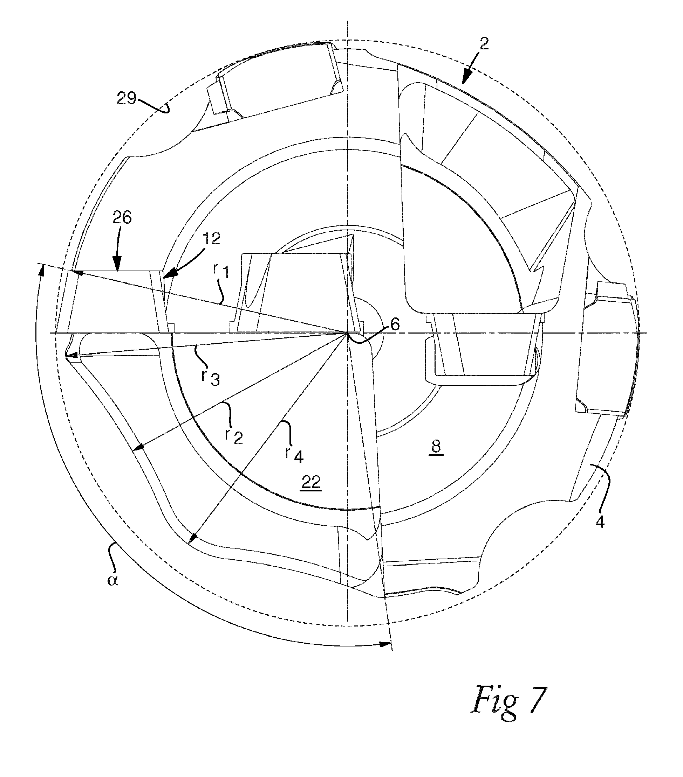

**Fig. 7** illustrates a cutter head 2 according to alternative embodiments. **Fig. 7** illustrates a view of the cutting end portion 8 along a centre axis 6 of the cutter head 2. A hole 29 being cut by the cutter head 2 is indicated in Fig. 7. The cutter head 2 of these embodiments resembles in much the cutter head of the previous embodiments. Further features will be discussed in the following.

Again, the opening 22 is arranged in a sector stretching over an angle α extending from the tangential support surface 26 of the cutting member seat 12 in a circumferential direction away from the tangential support surface 26. The sector has its centre in the centre axis 6.

Again, seen in the view of the cutting end portion 8, i.e. as shown in **Fig. 7**, the cutter body 4 has a first outer radial distance r1 at the cutting member seat 12, and a second outer radial distance r2 in a portion of the sector. The first outer radial distance r1 is larger than the second outer radial distance r2. Seen in the view of the cutting end portion 8, the cutter body 4 along a circumference within the sector has a varying outer radial distance. The varying outer radial distance ranges between the second outer radial distance r2 and a third outer radial distance r3. The third outer radial distance r3 is larger than the second outer radial distance r2.

The varying outer radial distance has a fourth outer radial distance r4. The fourth outer radial distance r4 extends perpendicularly to the centre axis 6 from the centre axis 6 to an outer circumference of the cutter body 4. The fourth outer radial distance r4 is larger than the second outer radial distance r2. The fourth outer radial distance is r4 arranged at an opposite circumferential side of the second outer radial distance r2 than the third outer radial distance r3. The second outer radial distance r2 forms a local minimum. The fourth outer radial distance r4 forms a local maximum of the varying radial distance within the sector.

This invention should not be construed as limited to the embodiments set forth herein. A person skilled in the art will realize that different features of the embodiments disclosed herein may be combined to create embodiments other than those described herein, without departing from the scope of the present invention, as defined by the appended claims. For instance, the cutter head may be configured for boring or trepanning instead of cutting heads for solid drilling as in the illustrated embodiments. Therefore, it is to be understood that the foregoing is illustrative of various example embodiments and that the invention is defined only by the appended claims.

As used herein, the term "comprising" or "comprises" is open-ended, and includes one or more stated features, elements, steps, components or functions but does not preclude the presence or addition of one or more other features, elements, steps, components, functions or groups thereof.

## Claims

1. A cutter head (2) for deep hole cutting comprising a cutter body (4) having an axially extending centre axis (6), which centre axis (6) extends along a centre of a hole to be produced by the cutter head (2), the cutter body (4) having a cutting end portion (8) and a connecting end portion (10) opposite to each other seen along the centre axis (6), the connecting end portion (10) being configured to be connected to a drill tube, wherein the cutter body (4) comprises:
a cutting member seat (12) at a peripheral portion at the cutting end portion (8), the cutting member seat (12) having a tangential support surface (26) and being configured for receiving a cutting member (14) configured for cutting a workpiece in an axial direction,
a support member seat (18) for receiving a support member (20), or a support member portion, the support member (20) or support member portion being configured for non-cutting radial support of the cutter head (2) in a workpiece, and
an opening (22) for discharging chips facing the cutting end portion (8) and communicating with an inner channel (24) extending in the cutter body (4), axially along the centre axis (6), wherein seen in a view of the cutting end portion (8) along the centre axis (6), the opening (22) is arranged in a sector stretching over an angle (α) extending from the tangential support surface (26) of the cutting member seat (12) in a circumferential direction away from the tangential support surface (26), and wherein
seen in the view of the cutting end portion (8), the cutter body (4) has a first outer radial distance (r1) at the cutting member seat (12) and a second outer radial distance (r2) in a portion of the sector, the first and second outer radial distances (r1, r2) extending perpendicularly to the centre axis (6) from the centre axis (6) to an outer circumference of the cutter body (4), and the first outer radial distance (r1) being larger than the second outer radial distance (r2),
**characterised in that**
seen in the view of the cutting end portion (8), the cutter body (4) along a circumference within the sector has a varying outer radial distance, the varying outer radial distance ranging between the second outer radial distance (r2) and a third outer radial distance (r3), the third outer radial distance (r3) extending perpendicularly to the centre axis (6) from the centre axis (6) to an outer circumference of the cutter body (4), and the third outer radial distance (r3) being larger than the second outer radial distance (r2).

2. The cutter head (2) according to claim 1, wherein the third outer radial distance (r3) forms a local maximum of the varying outer radial distance within the sector.

3. The cutter head (2) according to claim 1 or 2, wherein seen in the view of the cutting end portion (8) an outer surface of the cutter body (4) within the sector has a constant radius extending from a radial centre point (50), and wherein the radial centre point (50) is offset from the centre axis (6) in a direction away from the opening (22).

4. The cutter head (2) according to any one of the preceding claims, wherein the third outer radial distance (r3) is arranged at an angle (β) within a range of - 15 - +45 degrees from a line (28) extending from the centre axis (6) to a radially outer point of the cutting member (14), a positive direction of the angle (β) extending in the circumferential direction away from the tangential support surface (26).

5. The cutter head (2) according to claim 4, wherein the third outer radial distance (r3) is arranged at an angle (β) within a range of - 5 - +35 degrees from the line (28) extending from the centre axis (6) to the radially outer point of the cutting member (14).

6. The cutter head (2) according to claim 4 or 5, wherein the varying outer radial distance has a fourth outer radial distance (r4), the fourth outer radial distance (r4) extending perpendicularly to the centre axis (6) from the centre axis (6) to an outer circumference of the cutter body (4), and the fourth outer radial distance (r4) being larger than the second outer radial distance (r2), wherein the fourth outer radial distance (r4) is arranged at an opposite circumferential side of the second outer radial distance (r2) than the third outer radial distance (r3).

7. The cutter head (2) according to claim 6, wherein the fourth outer radial distance (r4) forms a local maximum of the varying radial distance within the sector.

8. The cutter head (2) according to any one of the preceding claims, wherein the third outer radial distance (r3) corresponds substantially to the first outer radial distance (r1).

9. The cutter head (2) according to any one of the preceding claims, wherein the cutter body (4) comprises a further opening (30) for discharging chips facing the cutting end portion (8) and communicating with the inner channel (24), wherein seen in the view of the cutting end portion (8), the further opening (30) is arranged in a further sector, and wherein seen in the view of the cutting end portion (8), the cutter body (4) along an outer circumference within the further sector has an outer radial distance of variable length, the outer radial distance of variable length within the further sector extending perpendicularly to the centre axis (6) from the centre axis (6) to the outer circumference of the cutter body (4).

10. The cutter head (2) according to claim 9, wherein the cutter body (4) comprise a partition (38) extending between the opening (22) and the further opening (30), and wherein the partition (38) comprises a chamfering portion (40), the chamfering portion (40) forming an acute angle (γ) pointing towards the inner channel (24).

11. The cutter head (2) according to claim 10, wherein the partition extends (38) along the centre axis (6).

12. The cutter head (2) according to any one of the preceding claims, wherein the cutter body (4) comprises:
a body portion (42) forming an inner cylindrical surface (43) of the inner channel (24), and
a transitional wall portion (44) extending between the opening (22) and the body portion (42), and wherein
the transitional wall portion (44) has an interior surface (46) extending at an angle (ε) within a range of 3 - 35 degrees to the centre axis (6), seen in a cross section through the cutter body (4) along the centre axis (6) and including the centre axis (6).

13. The cutter head (2) according to any one of the preceding claims, wherein the cutter head (2) comprises a cutting member (14) arranged in the cutting member seat (12), and wherein the cutting member (14) comprises a cutting edge (15), which cutting edge (15) is comprised in an asymmetric cutting edge geometry of the cutter head (2).

14. The cutter head (2) according to any one of the preceding claims, wherein seen in a view perpendicularly to the centre axis (6) a circumferentially extending outer edge (32) of the opening (22) is arranged at a distance from the cutting member seat (12).

15. The cutter head (2) according to claim 14, wherein seen in the view perpendicularly to the centre axis (6), the opening (22) comprises a longitudinal outer edge (34), the longitudinal outer edge (34) having a component extending in parallel with the centre axis (6), and wherein a transitional edge (36) extends between the longitudinal outer edge (34) and the circumferentially extending outer edge (32).

16. The cutter head (2) according to claim 15, wherein the third outer radial distance (r3) is arranged at the longitudinal outer edge (34) or at the transitional edge (36).

17. The cutter head (2) according to claim 15, wherein an outer radial distance at the longitudinal outer edge (34) and the transitional edge (36) is larger than the second outer radial distance (r2).

18. The cutter head (2) according to claim 17, wherein seen in the view along the centre axis (6), the third outer radial distance (r3) is arranged within an angle (φ) of less than 30 degrees from the longitudinal outer edge (34).
